# EUROPEAN PATENT SPECIFICATION

(11) **EP 2 520 471 B1**
(45) Date of publication and mention of the grant of the patent: **12.02.2014**
(21) Application number: 11164998.4
(22) Date of filing: 05.05.2011
(51) Int. Cl.: B60R 21/36, B60R 21/2338

(54) **A pedestrian airbag arrangement**
Fußgänger-Airbaganordnung
Agencement d'airbag pour piétons

(43) Date of publication of application: 07.11.2012
(73) Proprietor: Autoliv Development AB, 447 83 Vårgårda (SE)
(72) Inventor: Reiter, Thomas, 85256, Vierkirchen (DE); Lang, Christian, 80807, München (DE); Wehner, Katharina, 85241, Hebertshausen (DE); Mehnert, Mauricio, S-447 83, Vårgårda (SE)
(74) Representative: Parry, Simon James

(56) References cited:
- DE-A1-102009 005 305
- JP-A- 7 125 603
- US-A1- 2003 192 730
- US-A1- 2004 074 688
- US-A1- 2007 023 223
- US-B2- 7 584 988

## Description

The present invention relates to a pedestrian airbag arrangement, and more particularly relates to a pedestrian airbag arrangement on a motor vehicle having a windscreen.

When a motor vehicle is involved in a frontal impact with a pedestrian, it is common for the body of the pedestrian to strike the windscreen of the vehicle which can result in serious injury to the pedestrian, and significant damage to the vehicle. In an attempt to alleviate this, it has been proposed to provide a motor vehicle with a so-called pedestrian airbag which, if vehicle sensors indicate that a collision with a pedestrian is occurring or is likely to occur, inflates to cover a central portion of the windscreen, and/or the left and right A-pillars of the vehicle. Typically, an airbag of this general type is provided in an initially tightly folded and/or rolled package and is stored beneath a rear part of the vehicle's hood or bonnet, or beneath a cowl which is provided between the base of the windscreen and the rear part of the hood or bonnet. The rear of the hood or bonnet may be lifted, by a suitable air-bag, piston or other arrangement, to allow sufficient space for the pedestrian airbag to inflate so that it deploys in a manner effective to cover at least part of the windscreen and/or A-pillars of the vehicle, thereby cushioning the impact of a pedestrian with these parts of the vehicle. Alternatively, it is also possible to configure the pedestrian airbag such that as it begins inflation it performs the hood-lifting function itself. Such an arrangement may incorporate a cell structure to the pedestrian airbag beneath the hood, or may comprise a structure adjacent the airbag to guide the airbag for inflation in a direction effective to lift the rear part of the hood or bonnet.

As will be appreciated, however, space beneath the rear part of a vehicle's hood or bonnet can be very limited which makes it difficult to conveniently package a sufficiently large airbag to ensure adequate protection for a pedestrian. Also, the larger the airbag which is successfully packaged in such an arrangement, then the larger the volume of gas required to inflate the airbag (which also necessitates a larger inflator). Relying on a large volume of gas to inflate a pedestrian airbag generally results in a slower deployment time which can adversely affect the effectiveness of the airbag in preventing or reducing injuries to a pedestrian.

US2007/023223 A1 discloses a pedestrian airbag that deploys over part of a vehicle's windscreen.

It is therefore an object of the present invention to provide an improved pedestrian airbag arrangement.

According to a first aspect of the present invention, there is provided a pedestrian airbag arrangement on a motor vehicle having a windscreen, the arrangement comprising: an airbag having an inflatable volume for the receipt of inflating gas and being configured for deployment upon inflation so as to extend over or across at least part of the windscreen, the airbag comprising a front layer of flexible material and a rear layer of flexible material and having a pair of internal tethers provided inside the inflatable volume, each said tether interconnecting said front and rear layers between a respective rear anchorage on said rear layer and a respective front anchorage on said front layer, wherein said front anchorages are spaced from one another, the tethers thus being configured to become tensioned in a divergent manner between said front and rear layers upon deployment of the airbag and to thereby control inflation of the airbag such that the airbag adopts an inflated condition defining a cavity between the airbag and the windscreen, wherein said rear anchorages are substantially coincident such that there is no spacing between said rear anchorages.

Conveniently, each said anchorage is elongate having a length extending generally transversely relative to the vehicle in the deployed condition of the airbag.

Preferably, the arrangement comprises a said pair of tethers in a central region of said inflatable volume.

Advantageously, the arrangement comprises a first said pair of tethers and a second said pair of tethers.

Conveniently, the front anchorages of said first pair of tethers are spaced from one another by more than the spacing between the front anchorages of said second pair of tethers.

Preferably, the rear anchorages of said first pair of tethers are spaced from one another by more than the spacing between the rear anchorages of said second pair of tethers.

Advantageously, said first pair of tethers is provided in a transversely central region of said inflatable volume relative to the vehicle in the deployed condition, and said second pair of tethers is spaced to one side of said first pair of tethers.

Conveniently, the arrangement comprises two said second pairs of tethers, each second pair of tethers being spaced to a respective side of the first pair of tethers.

Preferably, said front layer, said rear layer and said tethers are each formed of fabric.

Advantageously, said tethers are fixedly connected to said front and rear layers at said anchorages.

Conveniently, said tethers are each defined by part of a single sheet of flexible material connected to said front and rear layers at said anchorages.

Preferably, said front layer, said rear layer and said tethers are formed integrally via a one-piece weaving process.

The present invention thus provides a pedestrian airbag arrangement on a motor vehicle having a windscreen, the arrangement comprising: an airbag having an inflatable volume for the receipt of inflating gas and being configured for deployment upon inflation so as to extend over or across at least part of the windscreen, the airbag comprising a front layer of flexible material and a rear layer of flexible material and being characterised by a pair of internal tethers provided inside the inflatable volume, each said tether interconnecting said front and rear layers between a respective rear anchorage on said rear panel and a respective front anchorage on said front panel, wherein said front anchorages are spaced from one another and said rear anchorages are substantially coincident, the tethers thus being configured to become tensioned in a divergent manner between said front and rear layers upon deployment of the airbag and to thereby control inflation of the airbag such that the airbag adopts an inflated condition defining a cavity between the airbag and the windscreen.

So that the invention may be more readily understood, and so that further features thereof may be appreciated, embodiments of the invention will now be described by way of example with reference to the accompanying drawings in which:
Figure 1 is a schematic illustration of a basic form of airbag suitable for use in a pedestrian airbag arrangement;
Figure 2 is a schematic illustration showing a plurality of internal tethers provided within the inflatable volume of the airbag;
Figure 3 is a schematic illustration showing a possible way in which the tethers are provided by a single flexible element inside the inflatable volume;
Figure 4 is a schematic cross-sectional view taken along line IV-IV in figure 2, showing the airbag in an inflated condition in which it is deployed across the windscreen of a motor vehicle;
Figure 5 is a schematic cross-sectional view similar to that of figure 4, but taken along line V-V of figure 2;
Figure 6 is a schematic illustration similar to that of figure 2, but showing an alternative tether configuration which is in accordance with the present invention;
Figure 7 is a schematic cross-sectional view taken along line VII-VII in figure 6, showing the airbag in an inflated condition in which it is deployed across the windscreen of a motor vehicle; and
Figure 8 is a schematic cross-sectional view similar to that of figure 7, but taken along line VIII-VIII of figure 6.

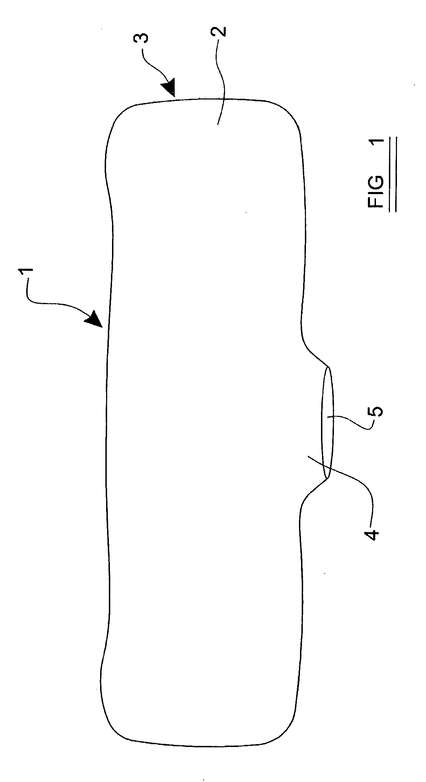

Referring initially to figure 1, there is shown an airbag 1 suitable for use in a pedestrian airbag arrangement. The airbag 1 illustrated is shown in a basic form to clearly illustrate the general concept of the invention. However, as will be appreciated by those of skill in the art, other more complex airbag configurations may be used instead.

The airbag 1 may be formed from two substantially identical and generally rectangular sheets 2, 3 of flexible material, such as woven fabric, which are superimposed on one another and interconnected around their aligned edges by a peripheral seam 4 to define therebetween a large internal inflatable volume for the receipt of inflating gas from an inflator such as a gas generator. The airbag is formed so as to have an open neck region 4 defining a gas inlet aperture 5 for connection to the inflator in a known manner.

As will be appreciated by those of skill in the art of airbag manufacture, although the airbag 1 has been described above as being formed from two separate sheets 2, 3 of flexible material, it is envisaged that in variants of the invention the airbag could be formed from a single sheet of flexible material, the sheet being folded in half to create two superimposed layers which can then be interconnected by a peripheral seam in an otherwise similar manner to that described above with reference to figure 1. It is also envisaged that in some embodiments the two sheets 2, 3 could be woven simultaneously via a so-called "one-piece weaving" technique known *per se* in which the warp and weft yarns forming the two layers are interwoven in selected areas to form an interconnecting peripheral seam which is integral to the woven structure of the two sheets.

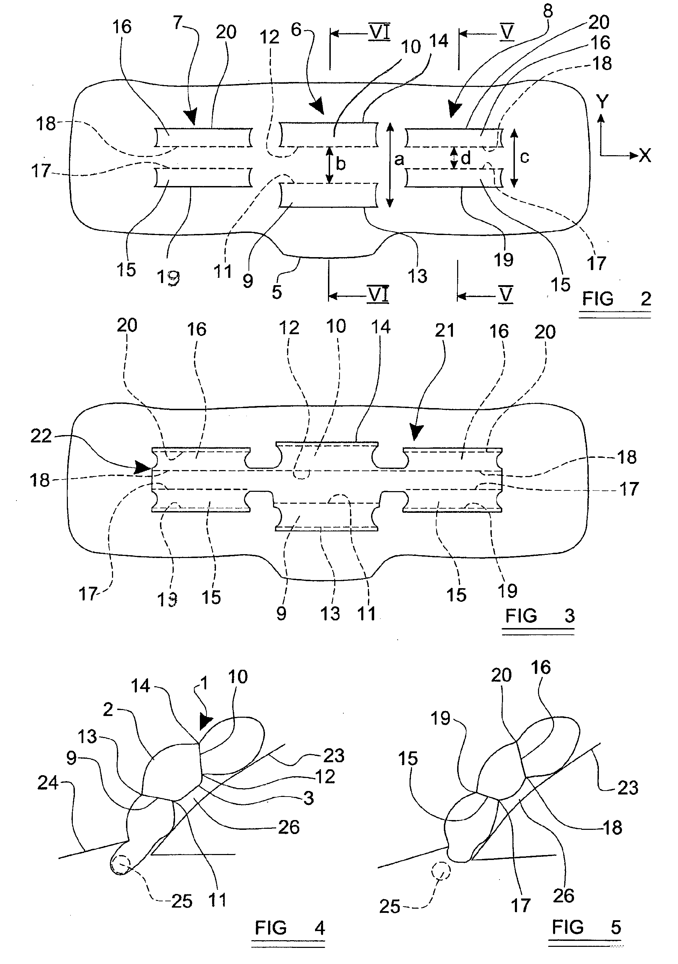

Turning now to consider figure 2, the airbag is provided with a plurality of internal tethers between the front and rear sheets 2, 3, and thus inside the inflatable volume of the airbag. The tethers are arranged in pairs, and the embodiment illustrated comprises three such pairs of tethers, namely a central pair 6 and left and right side pairs 7, 8. Figure 2 shows the positions of the pairs of tethers as viewed from above and is thus representative of the positions of the tethers relative to the transverse axis x of the motor vehicle when the airbag is inflated and deployed across the windscreen of the vehicle (not shown in figure 2). It will thus be noted that the central pair of tethers 6 is provided in a transversely central region of the airbag's inflatable volume, and the side pairs 7, 8 are spaced to respective sides of the central pair 6.

Focussing initially on the central pair of tethers 6, it will be noted that the central pair comprises a first tether 9 which is proximal to the gas inlet aperture 5, and a second tether 10 which is distal to the gas inlet aperture 5. The first and second tethers 9, 10 each have a generally similar rectangular form, elongate in the transverse direction x, and are each connected along one side edge to the rear sheet 3 to form a respective rear anchorage 11, 12, and along another side edge to the front sheet 2 to form a respective front anchorage 13, 14. As will thus be appreciated, the resulting front and rear anchorages 11-14 are each elongate, having a length extending generally transversely. The front anchorages 13, 14 are spaced from one another across the front sheet 2 in a longitudinal sense by a distance (a) which is greater than the spacing (b) between the rear anchorages 11, 12 across the rear sheet 3.

The left and right side pairs of tethers 7, 8 take a similar form to the central pair 6 and thus each side pair comprises a first tether 15 and a second tether 16, each of which again has a generally similar rectangular form, elongate in the transverse direction x. The first and second tethers 15, 16 of the side pairs 7, 8 are also each connected along one side edge to the rear sheet 3 to form a respective rear anchorage 17, 18, and along another side edge to the front sheet 2 to form a respective front anchorage 19, 20, said anchorages again each being elongate with a length extending generally transversely. In a similar manner to the central pair of tethers 6, the front anchorages 19, 20 of each side pair 7, 8 are spaced from one another across the front sheet 2 in a longitudinal sense by a distance (c) which is greater than the spacing (d) between the corresponding rear anchorages 17, 18 across the rear sheet 3.

In the arrangement shown in figure 2, it will also be noted that the rear anchorages 18 of the second side tethers 16 are substantially collinear with the rear anchorage 12 of the second central tether 10, but that the spacing (d) between the rear anchorages 17, 18 of each side pair 7, 8 is somewhat less than the spacing (b) between the rear anchorages 11, 12 of the central pair 6. Furthermore, the spacing (c) between the front anchorages 19, 20 of each side pair 7, 8 is also somewhat less than the spacing (a) between the front anchorages 13, 14 of the central pair 6.

It is envisaged the internal tethers 9, 10, 15, 16 may each be formed of fabric and be fixedly connected to the front and rear sheets 2, 3 at their respective anchorages 11-14, 17-20 by seams which may, for example be formed as lines of stitching between the fabric of the tethers and the fabric of the sheets 2, 3. However, in the event that the sheets 2, 3 are woven simultaneously via a so-called "one-piece weaving technique" as proposed above, the tethers may also be simultaneously woven such that the warp and weft yarns of the fabric tethers are interwoven in the regions of the anchorages to form seams which are integral to the woven structure of the sheets 2, 3.

It is also to be noted that whilst the tethers 9, 10, 15, 16 may each be provided as separate elements, for convenience of manufacture they may alternatively be defined by respective parts of a single sheet of flexible material (most preferably fabric) which is connected to said front and rear sheets 2, 3 at selected areas to define said anchorages 11-14, 17-20. An example of such a single sheet 21 is shown schematically in figure 3. As will be noted, the single sheet 21 is generally elongate and has a very approximately rectangular overall configuration, but has a plurality of projecting tabs, each of which defines a respective tether 9, 10, 15, 16. The anchorages 11-14, 17-20 are formed by respective lines of stitching. However, it will be noted that because the rear anchorages 18 of the second side tethers 16 are substantially collinear with the rear anchorage 12 of the second central tether 10, these anchorages can all be created by a single line of stitching 22 extending the full length of the sheet 21.

The manner in which the tethers of each pair 6, 7, 8 are connected between the front and rear sheets 2, 3 of the airbag such that their front anchorages 13, 14, 19, 20 on the front sheet 2 are spaced further from one another than their rear anchorages 11, 12, 17, 18 on the rear sheet 3 imparts an important characteristic to the airbag as it inflates over the windscreen of a motor vehicle 23 of a motor vehicle upon deployment, as will now be described with reference to figures 4 and 5. It is to be noted in this regard that figure 4 represents a schematic cross-sectional view taken through the airbag 1 along line IV-IV in figure 2, and shows the airbag 1 in an inflated condition following deployment from beneath the rear part of the hood or bonnet 24 of the motor vehicle upon actuation of an inflator 25 in a manner known *per se*. Figure 5 shows a similar view, but taken along line V-V in figure 2. Figure 4 thus shows the shape of the inflated airbag 1 in a central region relative to the transverse axis x of the vehicle, resulting from the function of the central pair of tethers 6, whilst figure 5 shows the shape of the inflated airbag 1 in a region located to one side of the central region, resulting from the function of the side pair of tethers 8. The other side pair of tethers 7 will, of course, create a similar shape on the opposite side of the airbag.

With particular reference to figure 4, it will be noted that as the airbag 1 inflates upon the flow of inflating gas into the inflatable volume of the airbag from the inflator 25, the front and rear sheets 2, 3 defining the inflatable volume are forced apart from one another. This causes the tethers 9, 10 of the central pair 6 to become tensioned between the front and rear sheets 2, 3, thereby limiting the movement of the sheets 2, 3 apart from one another in the central region of the airbag. Because the rear anchorages 11, 12 where the tethers 9, 10 are connected to the rear sheet 3 are located closer to one another than the front anchorages 13, 14, the tethers are caused to adopt a divergent configuration as illustrated, with there being a larger extent of the front sheet 2 extending between the tethers than the rear sheet 3. This divergent characteristic is effective to induce a degree of curvature to the inflated airbag 1, in a generally concave manner towards the windscreen 23 of the vehicle as illustrated. The tethers 9, 10 thus control inflation of the airbag 1 such that a cavity 26 is defined between the airbag 1 and the windscreen 23 in the region of the tethers 9, 10.

As illustrated in figure 5, the tethers 15, 16 of the side pairs 7, 8 also become tensioned in a similar divergent manner. However, because the front and rear anchorages 19, 20, 17, 18 are spaced more closely to one another in the side regions of the airbag, the effect here is less pronounced with a slightly reduced degree of curvature being imparted to the airbag, and the resulting cavity 26 being slightly reduced in depth in comparison the central region of the airbag.

It has been found that the above-mentioned inflation characteristic in which a cavity 26 is defined between the inflated airbag 1 and the windscreen, particularly in the central region of the airbag relative to the transverse direction of the vehicle, significantly improves the protection afforded to the head of a pedestrian striking the airbag 1. It is thought that this improvement in the level of protection results from the increase in distance through which energy can be absorbed by the airbag. It has also been found that the head of a pedestrian striking the airbag arrangement of the present invention in the region of the cavity tends to rebound from the airbag to a lesser degree than in the case of more conventional arrangements in which there is no cavity formed between the airbag and the windscreen.

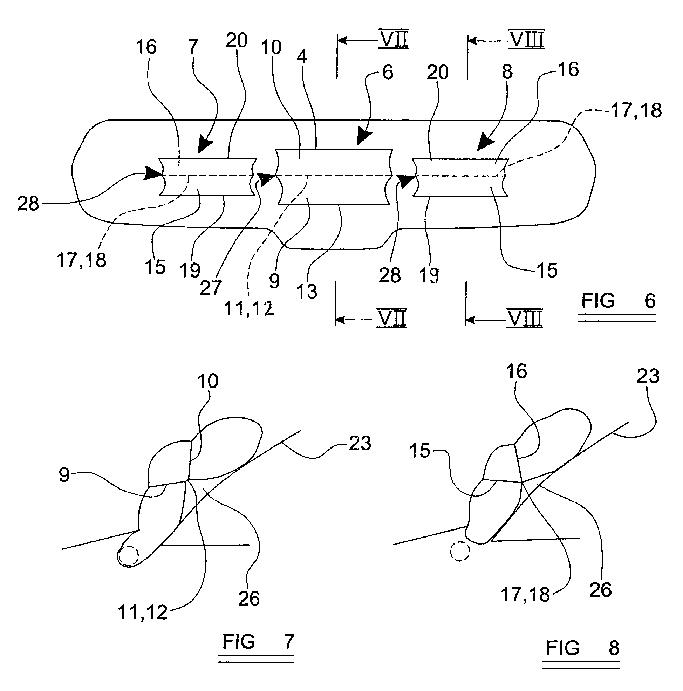

Turning now to consider figures 6 to 8, there is illustrated an alternative airbag 1 in accordance with the present invention. The same reference numerals are used in these drawings to denote identical or similar parts of the airbag. As will be immediately apparent from figures 6 to 8, in this embodiment the rear anchorages 11, 12 and 17, 18 of each pair of tethers 6, 7, 8 are substantially coincident such that there is actually no spacing between the rear anchorages of each pair. More particularly, it is envisaged that the rear anchorages 11, 12 and 17, 18 of each pair of tethers 6, 7, 8 could be formed by single seams 27, 28, such as stitched seams or even one-piece woven seams, between the tethers and the rear sheet 3 of the airbag 1. In the particular arrangement illustrated it will be noted that the coincident rear anchorages 11, 12 and 17, 18 of the three pairs of tethers 6, 7, 8 are all substantially collinear, however this need not necessarily be the case.

Despite the coincident nature of the rear anchorages 11, 12 and 17, 18 in this embodiment, it will be noted that the practical effect of the tethers 9, 10, 15, 16 is largely unchanged in comparison to the first arrangement of figures 1 to 5. In particular, it will be noted from figures 7 and 8 that the tethers 9, 10 and 15, 16 still become tensioned in a divergent manner upon inflation of the airbag, and so are still effective to induce a degree of curvature to the inflated airbag 1, in a generally concave manner towards the windscreen 23 of the vehicle as illustrated, thereby defining a cavity 26 between the airbag 1 and the windscreen 23 in the region of the tethers.

When used in this specification and claims, the terms "comprises" and "comprising" and variations thereof mean that the specified features, steps or integers are included. The terms are not to be interpreted to exclude the presence of other features, steps or integers.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting.

## Claims

1. A pedestrian airbag arrangement on a motor vehicle having a windscreen (23), the arrangement comprising: an airbag (1) having an inflatable volume for the receipt of inflating gas and being configured for deployment upon inflation so as to extend over or across at least part of the windscreen (23), the airbag (1) comprising a front layer (2) of flexible material and a rear layer (3) of flexible material and having a pair of internal tethers (9, 10) provided inside the inflatable volume, each said tether (9, 10) interconnecting said front and rear layers (2, 3) between a respective rear anchorage (11, 12) on said rear layer and a respective front anchorage (13, 14) on said front layer, wherein said front anchorages (13, 14) are spaced from one another, the tethers (9, 10) thus being configured to become tensioned in a divergent manner between said front and rear layers (2, 3) upon deployment of the airbag (1) and to thereby control inflation of the airbag such that the airbag adopts an inflated condition defining a cavity (26) between the airbag (1) and the windscreen (23); the arrangement being **characterised in that** said rear anchorages (11, 12) are substantially coincident such that there is no spacing between said rear anchorages (11, 12).

2. A pedestrian airbag arrangement according to claim 1, wherein each said anchorage (11, 12, 13, 14) is elongate having a length extending generally transversely relative to the vehicle in the deployed condition of the airbag (1).

3. A pedestrian airbag arrangement according to claim 1 or claim 2, comprising a said pair (6) of tethers in a central region of said inflatable volume.

4. A pedestrian airbag arrangement according to any preceding claim, comprising a first said pair of tethers (6) and a second said pair of tethers (7).

5. A pedestrian airbag arrangement according to claim 4, wherein the front anchorages (13, 14) of said first pair of tethers (6) are spaced from one another by more than the spacing between the front anchorages (19, 20) of said second pair of tethers (7).

6. A pedestrian airbag arrangement according to claim 4 or claim 5, wherein the rear anchorages (11, 12) of said first pair of tethers (6) are spaced from one another by more than the spacing between the rear anchorages (17, 18) of said second pair of tethers (7).

7. A pedestrian airbag arrangement according to any one of claims 4 to 6, wherein said first pair of tethers (6) is provided in a transversely central region of said inflatable volume relative to the vehicle in the deployed condition, and said second pair of tethers (7) is spaced to one side of said first pair of tethers (6).

8. A pedestrian airbag arrangement according to claim 7, comprising two said second pairs of tethers (7, 8), each second pair of tethers (7, 8) being spaced to a respective side of the first pair of tethers (6).

9. A pedestrian airbag arrangement according to any preceding claim, wherein said front layer (2), said rear layer (3) and said tethers (9, 10, 15, 16) are each formed of fabric.

10. A pedestrian airbag arrangement according to any preceding claim, wherein said tethers (9, 10, 15, 16) are fixedly connected to said front and rear layers (2, 3) at said anchorages (11-14, 17-20).

11. A pedestrian airbag arrangement according to any preceding claim, wherein said tethers (9, 10, 15, 16) are each defined by part of a single sheet (21) of flexible material connected to said front and rear layers (2, 3) at said anchorages (11-14, 17-20).

12. A pedestrian airbag arrangement according to claim 9, wherein said front layer (2), said rear layer (3) and said tethers (9, 10, 15, 16) are formed integrally via a one-piece weaving process.

## Patentansprüche

1. Fußgänger-Airbaganordnung an einem Kraftfahrzeug mit einer Windschutzscheibe (23), wobei die Anordnung Folgendes umfasst: einen Airbag (1), der ein aufblasbares Volumen zur Aufnahme von Füllgas aufweist und so eingerichtet ist, dass er sich beim Aufblasen enifaltet, um sich über zumindest einem oder quer über zumindest einen Teil der Windschutzscheibe (23) zu erstrecken, wobei der Airbag (1) eine vordere Lage (2) aus flexiblem Material und eine hintere Lage (3) aus flexiblem Material umfasst und ein Paar innere Haltevorrichtungen (9, 10) aufweist, die in dem aufblasbaren Volumen angeordnet sind, wobei jede Haltevorrichtung (9, 10) die vordere und hintere Lage (2, 3) zwischen einer jeweiligen hinteren Verankerung (11, 12) an der hinteren Lage und einer jeweiligen vorderen Verankerung (13, 14) an der vorderen Lage miteinander verbindet, wobei die vorderen Verankerungen (13, 14) voneinander beabstandet sind, wobei die Haltevorrichtungen (9, 10) somit dafür eingerichtet sind, dass sie zwischen der vorderen und hinteren Lage (2, 3) beim Entfalten des Airbags (1) auseinanderlaufend gespannt werden und dadurch das Aufblasen des Airbags steuern, sodass der Airbag einen aufgeblasenen Zustand annimmt, der einen Hohlraum (26) zwischen dem Airbag (1) und der Windschutzscheibe (23) definiert; wobei die Anordnung **dadurch gekennzeichnet ist, dass** sich die hinteren Verankerungen (11, 12) im Wesentlichen decken, sodass zwischen den hinteren Verankerungen (11, 12) kein Zwischenraum vorhanden ist.

2. Fußgänger-Airbaganordnung nach Anspruch 1, wobei jede Verankerung (11, 12, 13, 14) länglich ist und eine Länge aufweist, die im entfalteten Zustand des Airbags (1) im Allgemeinen quer zum Fahrzeug verläuft.

3. Fußgänger-Airbaganordnung nach Anspruch 1 oder Anspruch 2, die ein Paar (6) Haltevorrichtungen in einem mittigen Bereich des aufblasbaren Volumens umfasst.

4. Fußgänger-Airbaganordnung nach einem vorhergehenden Anspruch, die ein erstes Paar Haltevorrichtungen (6) und ein zweites Paar Haltevorrichtungen (7) umfasst.

5. Fußgänger-Airbaganordnung nach Anspruch 4, wobei die vorderen Verankerungen (13, 14) des ersten Paars Haltevorrichtungen (6) voneinander um mehr als den Zwischenraum zwischen den vorderen Verankerungen (19, 20) des zweiten Paars Haltevorrichtungen (7) beabstandet sind.

6. Fußgänger-Airbaganordnung nach Anspruch 4 oder Anspruch 5, wobei die hinteren Verankerungen (11, 12) des ersten Paars Haltevorrichtungen (6) voneinander um mehr als den Zwischenraum zwischen den hinteren Verankerungen (17, 18) des zweiten Paars Haltevorrichtungen (7) beabstandet sind.

7. Fußgänger-Airbaganordnung nach einem der Ansprüche 4 bis 6, wobei das erste Paar Haltevorrichtungen (6) in einem querverlaufend mittigen Bereich des aufblasbaren Volumens bezogen auf das Fahrzeug im entfalteten Zustand angeordnet ist und das zweite Paar Haltevorrichtungen (7) auf einer Seite des ersten Paars Haltevorrichtungen (6) dazu beabstandet ist.

8. Fußgänger-Airbaganordnung nach Anspruch 7, die zwei zweite Paare Haltevorrichtungen (7, 8) umfasst, wobei jedes zweite Paar Haltevorrichtungen (7, 8) jeweils auf einer Seite des ersten Paars Haltevorrichtungen (6) dazu beabstandet ist.

9. Fußgänger-Airbaganordnung nach einem vorhergehenden Anspruch, wobei die vordere Lage (2), die hintere Lage (3) und die Haltevorrichtungen (9, 10, 15, 16) jeweils aus Stoff geformt sind.

10. Fußgänger-Airbaganordnung nach einem vorhergehenden Anspruch, wobei die Haltevorrichtungen (9, 10, 15, 16) fest mit der vorderen und hinteren Lage (2, 3) an den Verankerungen (11 bis 14, 17 bis 20) verbunden sind.

11. Fußgänger-Airbaganordnung nach einem vorhergehenden Anspruch, wobei die Haltevorrichtungen (9, 10, 15, 16) jeweils durch einen Teil einer einzelnen Bahn (21) aus flexiblem Material definiert sind, die mit der vorderen und hinteren Lage (2, 3) an den Verankerungen (11 bis 14, 17 bis 20) verbunden ist.

12. Fußgänger-Airbaganordnung nach Anspruch 9, wobei die vordere Lage (2), die hintere Lage (3) und die Haltevorrichtungen (9,10,15, 16) mittels eines Einteilwebverfahrens in einem Stück geformt sind.

## Revendications

1. Agencement d'airbag pour piétons sur un véhicule à moteur présentant un pare-brise (23), l'agencement comprenant : un airbag (1) présentant un volume gonflable pour recevoir du gaz de gonflage et qui est configuré pour se déployer lors du gonflage de façon à s'étendre sur ou en travers d'au moins une partie du pare-brise (23), l'airbag (1) comprenant une couche avant (2) de matériau souple et une couche arrière (3) de matériau souple et présentant une paire d'attaches intérieures (9, 10) disposées à l'intérieur du volume gonflable, chaque dite attache (9, 10) reliant entre elles lesdites couches avant et arrière (2, 3) entre un ancrage arrière (11, 12) respectif sur ladite couche arrière et un ancrage avant (13, 14) respectif sur ladite couche avant, dans lequel lesdits ancrages avant (13, 14) sont espacés l'un de l'autre, les attaches (9, 10) étant ainsi configurées pour passer à un état tendu de manière divergente entre lesdites couches avant et arrière (2, 3) lors du déploiement de l'airbag (1) et pour commander ainsi le gonflage de l'airbag de sorte que l'airbag adopte un état gonflé définissant une cavité (26) entre l'airbag (1) et le pare-brise (23) ; l'agencement étant **caractérisé en ce que** lesdits ancrages arrière (11, 12) coïncident pratiquement de sorte qu'il n'y a pas d'espace entre lesdits ancrages arrière (11, 12).

2. Agencement d'airbag pour piétons selon la revendication 1, dans lequel chaque dit ancrage (11, 12, 13, 14) est oblong présentant une longueur s'étendant de manière générale transversalement par rapport au véhicule dans l'état déployé de l'airbag (1).

3. Agencement d'airbag pour piétons selon la revendication 1 ou la revendication 2, comprenant une dite paire (6) d'attaches dans une zone centrale dudit volume gonflable.

4. Agencement d'airbag pour piétons selon une quelconque revendication précédente, comprenant une première dite paire d'attaches (6) et une seconde dite paire d'attaches (7).

5. Agencement d'airbag pour piétons selon la revendication 4, dans lequel les ancrages avant (13, 14) de ladite première paire d'attaches (6) sont espacés l'un de l'autre par une distance supérieure à l'espace entre les ancrages avant (19, 20) de ladite seconde paire d'attaches (7).

6. Agencement d'airbag pour piétons selon la revendication 4 ou la revendication 5, dans lequel les ancrages arrière (11, 12) de ladite première paire d'attaches (6) sont espacés l'un de l'autre par une distance supérieure à l'espace entre les ancrages arrière (17, 18) de ladite seconde paire d'attaches (7).

7. Agencement d'airbag pour piétons selon l'une quelconque des revendications 4 à 6, dans lequel ladite première paire d'attaches (6) est disposée dans une zone centrale dans le sens transversal dudit volume gonflable par rapport au véhicule dans l'état déployé, et ladite seconde paire d'attaches (7) est espacée par rapport à un côté de ladite première paire d'attaches (6).

8. Agencement d'airbag pour piétons selon la revendication 7, comprenant deux dites secondes paires d'attaches (7, 8), chaque seconde paire d'attaches (7, 8) étant espacée par rapport à un côté respectif de ladite première paire d'attaches (6).

9. Agencement d'airbag pour piétons selon une quelconque revendication précédente, dans lequel ladite couche avant (2), ladite couche arrière (3) et lesdites attaches (9, 10, 15, 16) sont toutes constituées de tissu.

10. Agencement d'airbag pour piétons selon une quelconque revendication précédente, dans lequel lesdites attaches (9, 10, 15, 16) sont reliées fixement auxdites couches avant et arrière (2, 3) par lesdits ancrages (11-14, 17-20).

11. Agencement d'airbag pour piétons selon une quelconque revendication précédente, dans lequel lesdites attaches (9, 10, 15, 16) sont toutes définies par une partie d'une feuille unique (21) de matériau souple reliée auxdites couches avant et arrière (2, 3) par lesdits ancrages (11-14, 17-20).

12. Agencement d'airbag pour piétons selon la revendication 9, dans lequel ladite couche avant (2), ladite couche arrière (3) et lesdites attaches (9, 10, 15, 16) sont formées d'un seul tenant par un procédé de tissage une pièce.
